(19) **Europäisches Patentamt**
**European Patent Office**
**Office européen des brevets**

(11)   **EP 4 386 692 B1**

(12)   **EUROPEAN PATENT SPECIFICATION**

(45) Date of publication and mention
of the grant of the patent:
**01.10.2025   Bulletin 2025/40**

(21) Application number: **23842011.1**

(22) Date of filing: **26.06.2023**

(51) International Patent Classification (IPC):
***G06V 10/764*** *(2022.01)*

(52) Cooperative Patent Classification (CPC):
**G06V 10/764; G06V 10/774; G06V 10/7753;**
**G06V 10/776; G06V 10/82**

(86) International application number:
**PCT/CN2023/102430**

(87) International publication number:
**WO 2024/016945 (25.01.2024 Gazette 2024/04)**

(54)   **TRAINING METHOD FOR IMAGE CLASSIFICATION MODEL, IMAGE CLASSIFICATION METHOD, AND RELATED DEVICE**

TRAININGSVERFAHREN FÜR BILDKLASSIFIZIERUNGSMODELL, BILDKLASSIFIZIERUNGSVERFAHREN UND ZUGEHÖRIGE VORRICHTUNG

PROCÉDÉ D'ENTRAÎNEMENT POUR MODÈLE DE CLASSIFICATION D'IMAGE, PROCÉDÉ DE CLASSIFICATION D'IMAGE ET DISPOSITIF ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.07.2022   CN 202210872051**

(43) Date of publication of application:
**19.06.2024   Bulletin 2024/25**

(73) Proprietor: **Mashang Consumer Finance Co., Ltd.**
**Chongqing 401121 (CN)**

(72) Inventors:
• **LV, Yongchun**
**Chongqing 401121 (CN)**
• **ZHU, Hui**
**Chongqing 401121 (CN)**
• **ZHOU, Xunyi**
**Chongqing 401121 (CN)**
• **JIANG, Ning**
**Chongqing 401121 (CN)**
• **WU, Haiying**
**Chongqing 401121 (CN)**

(74) Representative: **Elzaburu S.L.P.**
**Paseo de la Castellana 259C**
**Torre de Cristal, planta 28**
**28046 Madrid (ES)**

(56) References cited:
CN-A- 112 149 733          CN-A- 113 240 655
CN-A- 114 298 173          CN-A- 114 722 958
CN-A- 114 742 119          CN-A- 114 742 119
CN-A- 115 375 706          US-A1- 2017 132 528
US-A1- 2017 132 528          US-A1- 2017 132 528

• XIE QIZHE ET AL: "Self-Training With Noisy Student Improves ImageNet Classification", 2020 IEEE/CVF CONFERENCE ON COMPUTER VISION AND PATTERN RECOGNITION (CVPR), IEEE, 13 June 2020 (2020-06-13), pages 10684 - 10695, XP033804876, DOI: 10.1109/CVPR42600.2020.01070
• ZHANGHAN KE ET AL: "Dual Student: Breaking the Limits of the Teacher in Semi-supervised Learning", ARXIV.ORG, CORNELL UNIVERSITY LIBRARY, 201 OLIN LIBRARY CORNELL UNIVERSITY ITHACA, NY 14853, 3 September 2019 (2019-09-03), XP081473497

**Description**

The present application claims the priority to Chinese patent application with application No. 202210872051.8, filed on July 19, 2022, entitled "METHOD FOR TRAINING IMAGE CLASSIFICATION MODEL, IMAGE CLASSIFICATION METHOD, AND RELATED

FIELD

The present application relates to a field of an artificial intelligence technology, and specifically to a method for training an image classification model, an image classification method and related device.

BACKGROUND

Semi-Supervised Learning (SSL) is a key issue in the field of pattern recognition and machine learning. It is a learning method that combines supervised learning and unsupervised learning. In recent years, semi-supervised learning has been widely used in fields such as image classification. The document *"Self-Training With Noisy Student Improves ImageNet Classification"* (XIE QIZHE et al., 2020 IEEE/CVF CONFERENCE ON COMPUTER VISION AND PATTERN RECOGNITION (CVPR), IEEE, DOI: 10.1109/CVPR42600.2020.01070) discloses that Noisy Student Training extends the idea of self-training and distillation with the use of equal or larger student models and noise added to the student during learning.

**SUMMARY**

The invention is set out in the appended set of claims. The present application provides a method for training an image classification model, an image classification method and related device, which are used to solve a problem of poor training effect of existing in an image classification model, which affects accuracy and stability of the image classification model of classifying an image finally.

An embodiment of the present application adopts the following technical solutions:

On the one hand, an embodiment of the present application provides a method for training an image classification model. The image classification model includes a first image classification sub-model and a second image classification sub-model. The method includes: obtaining an image set used for training an image classification model, the image set comprises a labeled image, an un-labeled image and a category label of the labeled image; discriminating the labeled image and the unlabeled image by a target image classification sub-model of the image classification model, and determining first classification reference information of the labeled image and first classification reference information of the unlabeled image; discriminating the unlabeled image by a non-target image classification sub-module of the image classification model, and determining second classification reference information of the unlabeled image; determining a classification loss of the target image classification sub-model according to the first classification reference information of the labeled image, the category label of the labeled image, and the second classification reference information of the unlabeled image, the classification loss of the target image classification sub-model comprises a classification loss of a first target image classification sub-model and a classification loss of a second target image classification sub-model; tuning a model parameter of the image classification model according to the classification loss of the first image classification sub-model and the classification loss of the second image classification sub-model.

On the one hand, embodiments of the present application provide an image classification method, which includes: discriminating an image to be processed by an image classification model and determining a classification reference information set of the image to be processed, wherein, the classification reference information set comprises first target classification reference information and second target classification reference information, the image classification model comprises a first image classification sub-model and a second image classification sub-model, the first image classification sub-model is used to discriminate the image to be processed and determine the first target classification reference information, the second image classification sub-model is used to discriminate the image to be processed and determine the second target classification reference information, the image classification model is trained according to the first aspect; determining a category to which the image to be processed belongs according to the classification reference information set of the image to be processed.

On the one hand, embodiments of the present application provide an electronic device, which includes a processor; a storage device for storing instructions executable by the processor; wherein, the processor is configured for executing the instructions to implement the above-mentioned method.

On the one hand, embodiments of the present application provide a computer-readable storage medium that, when instructions in the storage medium are executed by a processor of an electronic device, enables the electronic device to perform the above-mentioned method.

BRIEF DESCRIPTION OF THE DRAWINGS

The drawings described here are used to provide a further understanding of the present application and constitute a part of the present application. The illustrative embodiments of the present application and their descriptions are used to describe the present application and do not constitute an improper limitation of the present application. In the drawings:

FIG. 1 is a schematic diagram of a flowchart of a method for training an image classification model provided by an embodiment of the present application;
FIG. 2 is a schematic diagram of a flowchart of a method for training an image classification model provided by another embodiment of the present application;
FIG. 3 is a schematic diagram of a flowchart of an image classification method provided by another embodiment of the present application;
FIG. 4 is a schematic diagram of a structural of a device for training an image classification model provided by an embodiment of the present application;
FIG. 5 is a schematic diagram of a structural of an image classifying device provided by an embodiment of the present application;
FIG. 6 is a schematic diagram of a structural of an electronic device provided by an embodiment of the present application.

DESCRIPTION

In order to enable those in the art to better understand the technical solutions in the embodiments of the present application, the technical solutions of the present application will be clearly and completely described below with reference to specific embodiments of the present application and corresponding drawings. Obviously, the described embodiments are only some of the embodiments of the present application, but not all the embodiments. According to the embodiments in the present application, all other embodiments obtained by those of ordinary skill in the art without creative efforts fall within the scope of protection of the present application.

The terms "first", "second", etc. in specification and claims are used to distinguish similar objects and are not used to describe a specific order or sequence. It is to be understood that data so used are interchangeable under appropriate circumstances so that embodiments of the present application can be practiced in sequences other than those illustrated or described herein. In addition, "and/or" in the specification and claims indicates at least one of the two objects, and the character "/" generally indicates that the related objects are in an "or" relationship.

The existing method for training an image classification model uses a pre-trained teacher network to generate pseudo label for a sample image, and then performs semi-supervised learning through a student network by using the sample image with the pseudo-label and finally forms the image classification model. However, since the pseudo label is completely generated by the conversion of the information learned from the sample image by the teacher network, it is not conducive to the student network to fully mine and utilize the information of the sample image, especially in an early stage of training process, a confidence of the pseudo label generated by the teacher network is not high, which leads to the poor training effect of the image classification model, and then affects the accuracy and stability for classifying the image finally.

In view of this, an embodiment of the present application provides a method for training an image classification model. Under a semi-supervised learning framework, a one-way teacher-student relationship between each image classification sub-model of the image classification model is improved to a mutual teacher-student relationship. Using the information learned by one image classification sub-model from the sample image, to provide pseudo label for semi-supervised learning for another image classification sub-model, so that each image classification sub-model can learn from each other and teach each other, thereby making the information of the sample images can be fully mined and utilized, thereby improving the training effect of the image classification model and obtaining a more accurate and reliable image classification model.

The embodiment of the present application also provides an image classification method, which can accurately discriminate images by using the trained image classification model.

It should be understood that both the method for training the image classification model and the image classification method provided by the embodiments of the present application can be executed by an electronic device or software installed in the electronic device. The electronic device here may include a terminal device, such as a smartphone, a tablet computer, a laptop computer, a desktop computer, an intelligent voice interaction device, a smart home appliance, a smart watch, a vehicle-mounted terminal, an aircraft, etc. Or the electronic device may also include a server, for example, an independent physical server, or a server cluster or a distributed system composed of multiple physical servers, or a cloud server that provides basic cloud computing services.

The technical solutions provided by each embodiment of the present application will be described in detail below with reference to the accompanying drawings.

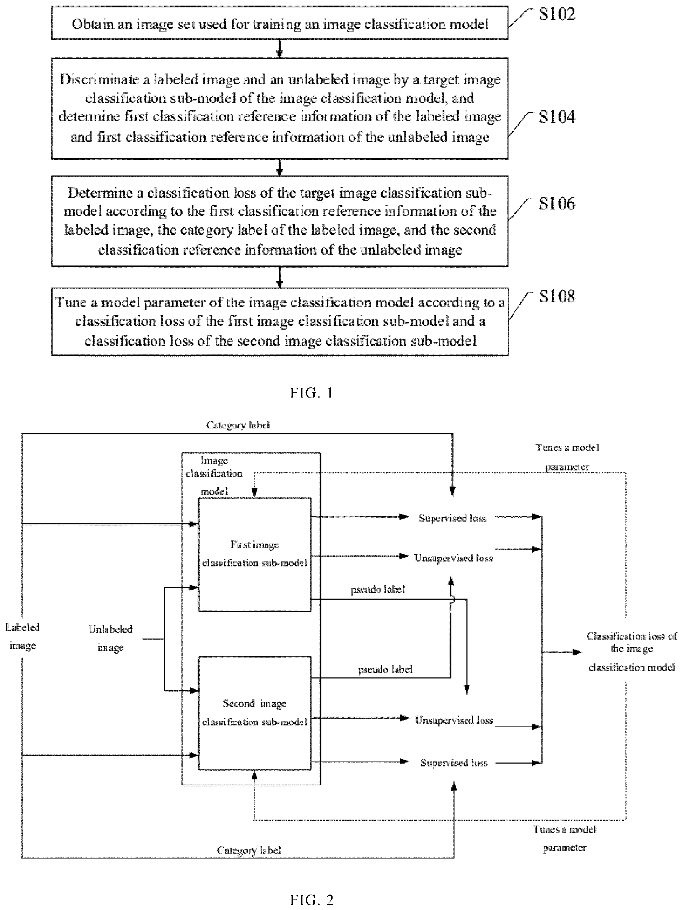

Please refer to FIG. 1, which is a schematic flowchart of a method for training an image classification model provided by one embodiment of the present application. The method may include the following steps:

S102, obtaining an image set used for training an image classification model.

Among them, the image set includes a labeled image, an un-labeled image and a category label of the labeled image.

The labeled image refers to an image with a category label, and the unlabeled image refers to an image without a category label. In practical applications, in order to further improve the accuracy for classifying image of the image classification model, the image set may include multiple labeled images and multiple unlabeled images, and the multiple labeled images may belong to different categories.

Among them, the category label of the labeled image is used to represent a real category to which the labeled image belongs, which can represent the real category to which the content presented in the labeled image belongs specifically. For example, the category to which the labeled image belongs can be a people, an animal, a landscape, etc. For another example, the category to which the labeled image belongs can also be subcategory of a certain main category, such as for a main category of the people, the category to which the labeled image belongs can be depressed, happy, angry, etc., or the category to which the labeled image belongs may also be a real face, a fake face, etc. For another example, for the category of the animal, the category to which the labeled image belongs may be a cat, a dog, a horse, a mule, etc. In practical applications, the category label of the labeled image may have any appropriate form. For example, the category label of the labeled image may be obtained by one-hot encoding of the real category to which the labeled image belongs or may also be obtained by word embedding of the real category to which the labeled image belongs. The embodiment of the present application does not limit the form of the category label.

S104, discriminating the labeled image and unlabeled image by a target image classification sub-model of the image classification model, and determining first classification reference information of the labeled image and first classification reference information of the unlabeled image.

In order to train the image classification model with high accuracy and reliability under a condition that the number of the labeled images is limited, as shown in FIG. 2, the image classification model in the embodiment of the present application may include a first image classification sub-model and a second image classification sub-model, the first image classification sub-model and the second image classification sub-model can all discriminate each image of the image set and determine corresponding classification reference information. Based on this, the image classification model is finally obtained by using the semi-supervised learning to train the image classification model. In practical applications, the first image classification sub-model and the second image classification sub-model may have the same network structure, or, in order to simplify the model structure to achieve compression and acceleration of the image classification model, the first image classification sub-model and the second image classification sub-model may also have different network structures. For example, the second image classification sub-model adopts a more streamlined structure than the first image classification sub-model.

In the embodiment of the present application, the target image classification sub-model is the first image classification sub-model or the second image classification sub-model. That is, the first image classification sub-model and the second image classification sub-model may be respectively used as the target image classification sub-model to identify the classification reference information of the labeled image of each image classification sub-model and the classification reference information of the unlabeled image of each image classification sub-model through the above mentioned S104.

Easy to distinguish,, the classification reference information of the labeled image corresponding to the target image classification sub-model is referred as the first classification reference information of the labeled image, and the classification reference information of the labeled image corresponds to another image classification sub-model of the image classification model except the target image classification sub-model is referred as the second classification reference information of the labeled image. Similarly, the classification reference information of the unlabeled image corresponding to the target image classification sub-model is referred as the first classification reference information of the labeled image, and the classification reference information of the unlabeled image corresponds to another image classification sub-model of the image classification model except the target image classification sub-model is referred as the second classification reference information of the labeled image.

The classification reference information of the labeled image may include at least one of the following information: a probability that the labeled image is identified as belonging to each preset category of multiple preset categories, a category to which the labeled image belongs, etc. Similarly, the classification reference information of the unlabeled image may include at least one of the following information: a probability that the unlabeled image is identified as belonging to each preset category of the multiple preset categories, a category to which the unlabeled image belongs, and so on. For example, multiple preset categories include cats, dogs, horses, and mules. The classification reference information of each image may include the probability that each image is recognized as belonging to a cat, a dog, a horse, or a mule, respectively, and the category to which each image belongs can be the category corresponding to the highest probability among the multiple preset categories.

In order to enable each image classification sub-model of the image classification model to fully understand and learn the images of the image set and improve an expressive ability of the image classification model, the images of the image set can be obtained by performing data augmentation processing on an initial image. That is, before the above mentioned S102, the method for training the image classification model provided by the embodiment of the present application may also include: performing data augmentation processing on an image of an initial image set, and obtaining the image set for training the image classification model, thereby adding a perturbation to the images of the image set. Among them, the initial image set includes an initial unlabeled image and an initial labeled image.

For the initial unlabeled image, the data augmentation processing of various augmentation levels can be performed on the initial unlabeled image to obtain the unlabeled image. There are multiple unlabeled images, and each unlabeled image corresponds to one augmentation level. Correspondingly, in the above mentioned S104, the first classification reference information for the labeled image may be obtained by discriminating the labeled image through the target image classification sub-model. And the first classification reference information for each unlabeled image may be obtained by discriminating each unlabeled image of the multiple unlabeled images through the target image classification sub-model.

The performing of the data augmentation processing of various augmentation levels on the initial unlabeled image, which can be implemented specifically as follows: performing a weakly-augmented processing on the initial unlabeled image and obtaining a first type of the unlabeled image, performing a strongly-augmented processing on the initial unlabeled image and obtaining a second type of the unlabeled image. That is, the unlabeled images include the first type of the unlabeled image and the second type of the unlabeled image, and an augmentation level of the first type of the unlabeled image is lower than the augmentation level of the type of the second unlabeled image.

The weakly-augmented processing may specifically include but is not limited to at least one of the following processing methods: translation, flipping, and so on. The strongly-augmented processing may include but is not limited to at least one of the following processing methods: occlusion, color transformation, Random Erase, and so on.

It can be understood that since the augmentation level of the weakly-augmented processing is low, that is, the disturbance adding to the initial unlabeled image is small, it will not distort the obtained first type of the unlabeled image, so that the target image classification sub-model can learn the noise of the first type of the unlabeled image according to the obtained accurate first classification reference information, which is conducive to improve the learning effect of the target image classification sub-model. In addition, considering that only performing the weakly-augmented processing on the initial unlabeled image may cause the target image classification sub-model to fall into an overfitting state, the essential features of the first type of the unlabeled image cannot be extracted. The disturbance brought in by the strongly-augmented processing is relatively large, which may cause distortion of the first type of the unlabeled image, but it can still retain features sufficient to identify the category of the unlabeled image. After performing the weakly-augmented processing and strongly-augmented processing on the initial unlabeled image, the initial unlabeled image is input to the target image classification sub-model, and the target image classification sub-model learns unlabeled images with different enhancement levels, which is conducive to improve the learning effect of the target image classification sub-model, and enhance an expressive ability of the target image classification sub-model.

In an embodiment of the present application, in order to further improve the expressive ability of the target image classification sub-model, before the above mentioned S104, the method for training the image classification model provided by the embodiment of the present application may also include: performing the weakly-augmented processing on the initial labeled image of the initial image set and obtaining the labeled image.

S106, determining a classification loss of the target image classification sub-model according to the first classification reference information of the labeled image, the category label of the labeled image, and the second classification reference information of the unlabeled image.

Among them, the second classification reference information of the unlabeled image is obtained by discriminating the unlabeled image by other image classification sub-models of the image classification model except the target image classification sub-model.

In other words, in the above mentioned S106, for the first image classification sub-model, the classification loss of the first image classification sub-model may be determined according to the classification reference information of the first image classification sub-model corresponding to the labeled image of the image set, the category label of the labeled image, and the classification reference information of second image classification sub-model corresponding to the unlabeled image of the image set. For the second image classification sub-model, the classification loss of the second image classification sub-model may be determined according to the classification reference information of the second image classification sub-model corresponding to the labeled image of the image set, the category label of the labeled image, and the classification reference information of first image classification sub-model corresponding to the unlabeled image of the image set.

In this way, the first image classification sub-model and the second image classification sub-model may use their own learned information to provide guidance to each other, so that the one-way teacher-student relationship between the first image classification sub-model and the second image classification sub-model is changed to a mutual teacher-student relationship, which is conducive to complementary learning and teaching between various image classification sub-models, so that the information of the images of the image set can be fully explored and utilized, which is conducive to improving the training effect of the image classification model.

In an embodiment of the present application, for each image classification sub-model, the classification loss of the image classification sub-model is used to indicate a difference between the classification reference information obtained by discriminating the image inputted to the image classification sub-model and the category represented by the category label of the inputted image.

Considering that the learning task performed by each image classification sub-model according to the input image set is a semi-supervised learning task, which combines a supervised learning task according to the labeled images and corresponding category labels of the labeled images and an unsupervised learning task based on the unlabeled images. Each learning task may generate a certain classification loss, for this reason, the classification loss of the target image classification sub-model can include a supervised loss and an unsupervised loss of the target image classification sub-model. Among them, the supervised loss of the target image classification sub-model is used to represent the classification loss caused by the target image classification sub-model performing a supervised learning task, and the unsupervised loss of the target image classification sub-model is used to represent the classification loss caused by the target image classification sub-model performing an unsupervised learning task.

In an embodiment of the present application, the supervised loss of the target image classification sub-model can be determined based on the first classification reference information of the labeled image of the image set and the category label of the labeled image. The unsupervised loss of the target image classification sub-model may be determined based on the first classification reference information and the second classification reference information of the unlabeled image of the image set.

In another embodiment of the present application, in order to enable the target image classification sub-model to fully understand and learn the input images and improve the expressive ability of the target image classification sub-model, the unlabeled images are images that are input into the target image classification sub-model after performing data augmentation processing of various augmentation levels on the initial unlabeled images. Then the obtained first classification reference information of the unlabeled images includes the first classification reference information of each unlabeled image. Correspondingly, the supervised loss of the target image classification sub-model can be determined based on the first classification reference information of the labeled images of the image set and the category labels of the labeled images. The unsupervised loss of the target image classification sub-model may be determined based on the first classification reference information and the second classification reference information of the unlabeled images of the image set.

The above-mentioned unlabeled images include the first type of the unlabeled image and the second type of the unlabeled image. The corresponding augmentation level of the first type of the unlabeled image is smaller than the corresponding augmentation level of the second type of the unlabeled image. Accordingly, the above-mentioned S106 may specifically include the following steps:

S161, generating a first type of pseudo label of the first type of the unlabeled image according to the second classification reference information of the first type of the unlabeled image.

Since the first type of the unlabeled image without a category label itself, generating a first type of the pseudo label of the first type of the unlabeled image according to the second classification reference information of the first type of the unlabeled images, which means to generate a manually label for the first type of the unlabeled image, for representing a predicted category to which the first type of the unlabeled images belongs, thereby providing guidance for the target image classification sub-model to perform the unsupervised learning task. In practical applications, the first type of the pseudo label of the first type of the unlabeled image may be used to indicate the predicted category to which the first type of the unlabeled image belongs. Of course, the first type of the pseudo label of the first type of the unlabeled image can also be used to indicate a first target object area of the first type of the unlabeled image and a predicted category to which the first target object area belongs. The first target object area refers to the area where a target object of the first type of the unlabeled image recognized by the target image classification sub-model is located. For example, in a face classification and recognition scenario, the first target object area refers to a face area of the first type of the unlabeled image.

The first classification reference information of the first type of the unlabeled image includes the probability that the first type of the unlabeled image is identified as belonging to each of the multiple preset categories. In this case, as an optional solution, the above S161 can be specifically implemented as: determining a preset category corresponding to the maximum probability from the multiple preset categories based on the second classification reference information of the first type of the unlabeled image; if the maximum probability corresponding to the preset category is greater than a preset probability threshold, then generating the first type of the pseudo label of the first type of the unlabeled image according to the preset category corresponding to the maximum probability.

As shown in FIG. 2, based on the classification reference information output by the second image classification sub-model for the first type of the unlabeled image, determining the preset category corresponding to the maximum probability from the multiple preset categories, if the maximum probability corresponding to the preset category is greater than the preset probability threshold, then generating the pseudo label of the first type of the unlabeled image corresponding to the first image classification sub-model; and based on the classification reference information output by the first image classification sub-model for the first type of the unlabeled image, determining the preset category corresponding to the maximum probability from the multiple preset categories, if the maximum probability corresponding to the preset category is greater than the preset probability threshold, then generating the pseudo label of the first type of the unlabeled image corresponding to the second image classification sub-model.

For example, the pseudo label of the first type of the unlabeled image corresponding to the first image classification sub-model can be determined by the following formula (1), and the pseudo label of the first type of the unlabeled image corresponding to the second image classification sub-model can be determined by the following formula (2):

$$\hat{y}_{\zeta 1}^{u} = \mathrm{ONE\_HOT}\left(\arg\max\left(q_2\left(x_\zeta^u\right)\right)\right) \quad \mathrm{if} \quad \max(q_2(x_\zeta^u)) \geq \gamma \quad (1)$$

$$\hat{y}_{\zeta 2}^{u} = \mathrm{ONE\_HOT}\left(\arg\max\left(q_1\left(x_\zeta^u\right)\right)\right) \quad \mathrm{if} \quad \max(q_1(x_\zeta^u)) \geq \gamma \quad (2)$$

Wherein, $\hat{y}_{\zeta 1}^{u}$ represents the pseudo label of the $\zeta$th first type of the unlabeled imagex $x_\zeta^u$ of the image set corresponding to the first image classification sub-model, ONE_HOT represents the one-hot encoding, $q_2$ represents the second image classification sub-model, $q_2\left(x_\zeta^u\right)$ represents the classification reference information output by the second image classification sub-model for the first type of the unlabeled image $x_\zeta^u$, $\max(q_2(x_\zeta^u))$ represents the maximum probability of the classification reference information, $\arg\max\left(q_2\left(x_\zeta^u\right)\right)$ represents the preset category corresponding to the maximum probability, $\gamma$ represents the preset probability threshold, $\hat{y}_{\zeta 2}^{u}$ represents the pseudo label of the first type of the unlabeled image $x_\zeta^u$ corresponding to the second image classification sub-model, $q_1$ represents the first image classification sub-model, $q_1\left(x_\zeta^u\right)$ represents the classification reference information output by the first image classification sub-model for the first type of the unlabeled image $x_\zeta^u$, $\max(q_1(x_\zeta^u))$ represents the maximum probability of the classification reference information, $\arg\max\left(q_1\left(x_\zeta^u\right)\right)$ represents the preset category corresponding to the maximum probability.

Since the augmentation level of the first type of the unlabeled image is low, that is, the disturbance for the initial unlabeled image is light, it will not distort the obtained first type of the unlabeled image. In addition, the maximum probability of the classification reference information of the first type of the unlabeled image is greater than the preset probability threshold, then generating the corresponding pseudo label according to the preset category corresponding to the maximum probability, which can greatly reduce the possibility of adding noise or errors to the pseudo label, thereby ensuring that each image classification sub-model learns the noise of the first type of the unlabeled image on the basis of obtaining accurate discrimination result by the sub-model, which is beneficial to improve the learning effect of each image classification sub-model.

S162, determine the unsupervised loss of the target image classification sub-model according to the first classification reference information of the second type of the unlabeled image and the first type of the pseudo label corresponding to the first type of the unlabeled image.

The unsupervised loss of the first image classification sub-model may be determined based on the classification reference information output by the first image classification sub-model for the second type of the unlabeled image of the image set and the pseudo label of the unlabeled image corresponding to the first image classification sub-model. And determining unsupervised loss of the second image classification sub-model based on the classification reference information output by the second image classification sub-model for the second type of the unlabeled image corresponding to the unlabeled image of the image set, and the pseudo label of the unlabeled image corresponding to the second image classification sub-model.

In the above mentioned S162, the unsupervised loss of the target image classification sub-model may be determined according to the first classification reference information of each second type of the unlabeled image of the image set, the first type of the pseudo label of each unlabeled image, and a preset loss function. In practical applications, the preset loss function can be set according to actual needs. For example, the preset loss function includes but not limited to at least one of a cross-entropy loss function, a classification loss function, and a bounding box regression loss function.

For example, for each first type of the unlabeled image of the image set, based on the first classification reference information of the second type unlabeled image, the first type of the pseudo label of the first type of the unlabeled image and the preset loss function, the unsupervised sub-loss of the first type of the unlabeled image is determined. Furthermore, the sum of the weights of the unsupervised sub-loss of each first type of the unlabeled image of the image set is determined as the unsupervised loss of the target image classification sub-model.

In an embodiment of the present application, considering that a confidence of the pseudo label generated in an early stage of training process is usually not high, which can easily lead to poor training results of the image classification model, the corresponding loss weight may be assigned to the first type of the unlabeled images based on the confidence of the first pseudo label associated with the unlabeled images. For example, assigning higher loss weight to the first type of the unlabeled image with high confidence pseudo labels, and assigning lower loss weight to the unlabeled image with low confidence pseudo label, so that the noise of the first type of the pseudo label can be resisted to a certain extent, which is beneficial to improve the training effect of the image classification model.

Before the above mentioned S162, the method for training the image classification model provided by the embodiment of the present application may also includes: determining the loss weight of the first type of the unlabeled image according to the first type of the pseudo label of the first type of the unlabeled image and the second type of the pseudo label of the first type of the unlabeled image. The second type of the pseudo label of the first type of the unlabeled image is generated based on the first classification reference information of the first type of the unlabeled image. The specific generation method is the same as that generating the first type of the pseudo label based on the first type of the unlabeled image. Correspondingly, in the above mentioned S162, based on the first classification reference information of the second type of the unlabeled image and the first type of the pseudo label of the first type of the unlabeled image, the unsupervised sub-loss of the first type of the unlabeled image is determined, and based on the loss weight of the first type of the unlabeled image and the unsupervised loss of the first type of the unlabeled image, the unsupervised loss of the target image classification sub-model is determined. For example, based on the loss weight of each first type of the unlabeled image of the image set, the unsupervised sub-loss of each first type of the unlabeled image of the image set can be determined to obtain the unsupervised loss of the target sub-model by using a weighted summation.

For example, the classification reference information obtained after predicting the same image by different image classification sub-models should theoretically be the same, and the pseudo label of the same image corresponding to different image classification sub-models should also be the same. In this regard, the predicted category indicated by the first type of the pseudo label of the first type of the unlabeled image is compared with the predicted category indicated by the second type of the pseudo label of the first type of the unlabeled image. If the two predicted categories are different, the confidence of the two pseudo labels of the first type of the unlabeled image is low, and thus a lower loss weight (i.e., a first preset weight) can be assigned to the first type of the unlabeled image. If the two predicted categories are the same, the confidence of the two pseudo labels of the first type of the unlabeled image is higher, and thus a higher loss weight (i.e., a second preset weight) can be assigned to the first type of the unlabeled image.

For example, the first type of the pseudo label of the first type of the unlabeled image may be used to indicate a first target object area of the first type of the unlabeled image and a predicted category to which the first target object area belongs. The second type of the pseudo label of the first type of the unlabeled image may be used to indicate a second target object area of the first type of the unlabeled image, and a predicted category to which the second target object area belongs. To ensure that the loss weight assigned to the first type of the unlabeled image better matches the confidence of the two pseudo labels corresponding to the first type of the unlabeled image, an intersection ratio between the first target object area and the second target object area can be determined, and the predicted category to which the first target object area belongs is compared with the prediction category to which the second target object area belongs and a comparison result is determined. Furthermore, based on the intersection ratio and the comparison result, the loss weight of the first type of the unlabeled image is determined.

For example, if the intersection ratio is less than or equal to a preset ratio or the comparison result indicates that the predicted category to which the first target object area belongs is different from the predicted category to which the second target object area belongs, then the confidences of the first type of the pseudo label and the second type of the pseudo label of the first type of the unlabeled image are low, and then assigning a first preset weight to the first type of the unlabeled image. If the intersection ratio is greater than the preset ratio, and the comparison result indicates that the predicted category to which the first target object area belongs is the same as the predicted category to which the second target object area belongs, then the confidences of the first type of the pseudo label and the second type of the pseudo label of the first type of the unlabeled image are low, and then assigning a second preset weight to the first type of the unlabeled image. and the second preset weight is greater than the first preset weight.

Correspondingly, in the above mentioned S162, the unsupervised loss of the target image classification sub-model can be determined through the following formula (3).

$$\mathcal{L}_{u_i} = \frac{1}{N_u}(\sum_{b \in B \backslash h} \mathcal{L}_{cls}(x_b^u, \hat{y}_{bi}^u) + \mathcal{L}_{reg}(x_b^u, \hat{y}_{bi}^u) + \delta \sum_{b \in h} \mathcal{L}_{cls}(x_b^u, \hat{y}_{bi}^u) +$$

$$\mathcal{L}_{reg}(x_b^u, \hat{y}_{bi}^u)) \quad (3)$$

Among them, $\mathcal{L}_{u_i}$ represents the unsupervised loss of the target image classification sub-model, $N_u$ represents the number of first type of the unlabeled images of the image set, $B$ represents the image set, $x_b^u$ represents the b-th first type of the unlabeled image of the image set, $b \in h$ indicates that the confidence degrees of the first type of the pseudo label and the second type of the pseudo label of the b-th first type of the unlabeled image are high, $b \in B \backslash h$ indicates that the confidences of the first type of the pseudo label and the second type of the pseudo label of the b-th first type of the unlabeled image are low. $\mathcal{L}_{cls}$ represents the classification loss function, $\mathcal{L}_{reg}$ represents the bounding box regression loss function, and $\hat{y}_{bi}^u$ represents the first type of the pseudo label of the first type of the unlabeled image $x_b^u$, $\delta$ represents the loss weight of the first type of the unlabeled image of the pseudo label with a higher confidence.

It is understandable that since the confidence of the pseudo label generated in the early stage of training process is usually not high, which can easily lead to poor training result of the image classification model, and the pseudo label generated after discriminating the same image through different image classification sub models should theoretically be the same. Based on this, based on the pseudo label of each image classification sub-model corresponding to the first type of the unlabeled images, the confidence of the pseudo label can be determined, and then the loss weight can be set for the first type of the unlabeled images, so that the noise of the first type of the pseudo label can be resisted to a certain extent, which is beneficial to improve the training effect of the image classification model.

S163, determining a supervised loss of the target image classification sub-model according to the first classification reference information of the labeled image and the category label of the labeled image.

For example, the supervised loss of the target image classification sub-model can be determined through the following formula (4):

$$\mathcal{L}_{s_i} = \frac{1}{N_l}\sum_b \mathcal{L}_{cls}(x_b^l, y_b^l) + \mathcal{L}_{reg}(x_b^l, y_b^l) \quad (4)$$

Among them, $\mathcal{L}_{s_i}$ represents the supervised loss of the target image classification sub-model, $N_l$ represents the number of labeled images of the image set, $x_b^l$ represents the 1-th labeled image of the image set, $y_b^l$ represents category label of the labeled image $x_b^l$, $\mathcal{L}_{cls}$ represents the classification loss function, and $\mathcal{L}_{reg}$ represents the bounding box regression loss function.

S164, determining a classification loss of the target image classification sub-model according to the unsupervised loss and the supervised loss of the target image classification sub-model.

For example, the classification loss of the target image classification sub-model is determined as the following formula (5):

$$\mathcal{L}_i = \mathcal{L}_{s_i} + \lambda_u \mathcal{L}_{u_i} \quad (5)$$

Among them, $\mathcal{L}_i$ represents the classification loss of the target image classification sub-model, $\mathcal{L}_{s_i}$ represents the supervised loss of the target image classification sub-model, $\mathcal{L}_{u_i}$ represents the unsupervised loss of the target image classification sub-model, and $\lambda_u$ represents the loss weight of the unsupervised loss.

It can be understood that each image classification sub-model of the image classification model performs a semi-supervised learning task based on the image set, which combines the supervised learning tasks based on the labeled images and corresponding category labels and the unsupervised learning task based on the unlabeled images and corresponding pseudo-labels. Each learning task may generate a certain classification loss, for this reason, for each image classification sub-model, the supervised loss of the image classification sub-model is determined based on the classification reference information outputted by the image classification sub-model and the category label of the labeled image, so that the supervised loss can accurately reflect the classification loss generated by the image classification sub-model when performing the supervised learning task. Using the rule that the classification reference information obtained from the same image classification sub-model after inputting the same image that has been processed by different augmentation levels into the same image classification sub-model is the same in theory. Generating a pseudo label of another image classification sub-model for the first type of the unlabeled image based on the classification reference information of the first type of the unlabeled image with lower augmentation level corresponding to the image classification sub-model, and then determining the unsupervised loss of each image classification sub-model by using the pseudo-label of each image classification sub-model corresponds to the first type of the unlabeled image and the classification reference information of the second type of the unlabeled image with higher augmentation level of each image classification sub-model. Not only makes the unsupervised loss can accurately reflect the classification loss generated by the corresponding image classification sub-model when performing the unsupervised learning task. It is also conducive to each image classification sub-model using the classification reference information of the first type of labeled image with lower augmentation level supervises the classification reference information of the second type of the unlabeled image with higher augmentation level during the unsupervised learning process, which is beneficial to improve the classification accuracy of each image classification sub-model.

The embodiment of the present application here shows a specific implementation method of determining the classification loss of the target image classification sub-model. Of course, it should be understood that the classification loss of the target image classification sub-model can also be determined in other ways, which is not limited in the embodiments of the present application.

S108, tuning a model parameter of the image classification model according to a classification loss of the first image classification sub-model and a classification loss of the second image classification sub-model.

In an embodiment of the present application, as shown in FIG. 2, the above mentioned S108 may include the following steps: S181, summing the classification loss of the first image classification sub-model and the classification loss of the second image classification sub-model by using a weighted summation and determining the classification loss of the image classification model.

Among them, the classification loss of the image classification model is used to indicate the difference between the classification reference information obtained by discriminating the image inputted to the image classification model and the real category to which the inputted image belongs. For example, the classification loss of the image classification model can be determined by the following formula (6):

$$\mathcal{L} = \mathcal{L}_1 + \mathcal{L}_2 = \mathcal{L}_{s_1} + \mathcal{L}_{s_2} + \lambda_u(\mathcal{L}_{u_1} + \mathcal{L}_{u_2}) \quad (6)$$

Among them, $\mathcal{L}$ represents the classification loss of the image classification model, $\mathcal{L}_1$ represents the classification loss of the first image classification sub-model, $\mathcal{L}_2$ represents the classification loss of the second image classification sub-model, and $\mathcal{L}_{s_1}$ represents the supervised loss of the first image classification sub-model, $\mathcal{L}_{s_2}$ represents the unsupervised loss of the first image classification sub-model, $\mathcal{L}_{s_2}$ represents the supervised loss of the second image classification sub-model, $\mathcal{L}_{u_2}$ represents the unsupervised loss of the second image classification sub-model, $\lambda_u$ represents the loss weight corresponding to the unsupervised loss.

S182, tuning the model parameter of the image classification model according to the classification loss of the image classification model by using a back propagation algorithm.

Among them, the model parameter of the image classification model may include a model parameter of the first image classification sub-model and a model parameter of the second image classification sub-model. For each image classification sub-model, taking a neural network as an example, the model parameter may include but are not limited to the number of neurons in each network layer of the image classification sub-model, a connection relationship between neurons in different network layers, and a weight of connection edge, an offset of a neuron in each network layer, etc.

Since the classification loss of the image classification model can reflect the difference between the classification reference information output by c discriminating the image inputted to the image classification model and the real category to which the inputted image belongs. In order to determine a high-accuracy image classification model, the model parameter of the first image classification sub-model and the second image classification sub-model are tuned respectively based on the classification loss of the image classification model through the back propagation algorithm.

When tuning the model parameter of the first image classification sub-model and the second image classification sub-model respectively by using the back propagation algorithm, a prediction loss caused by each network layer of the first image classification sub-model and the second image classification sub-model can be determined by using the back propagation algorithm based on the classification loss of the image classification model, the current model parameter of the first image classification sub-model and the current model parameter of the second image classification sub-model. Then, with a goal of reducing the classification loss of the image classification model, tuning the relevant parameter of each network layer of the first image classification sub-model and the relevant parameter of each network layer of the second image classification sub-model layer by layer.

The embodiment of the present application discloses a specific implementation of the above mentioned S182. Of course, it should be understood that the above mentioned S182 can also be implemented in other ways, and the embodiment of the present application does not limit this.

It should be noted that the above steps just tune the model parameter of the model for one time. In actual applications, the model parameter of the model may need to be tuned multiple times. Therefore, the above steps S102 to S108 can be repeated multiple times until a preset condition for stop training is met. Thus, the image classification model is obtained finally. The preset condition for stop training may be that the classification loss of the image classification model is less than a preset loss threshold, or the preset condition may be that the number of tunes the model parameter of the model reaches a preset number, etc. This is not limited in the embodiments of the present application.

Since there may be a certain difference between the classification reference information determined by discriminating the image inputted to the image classification model and the real category to which the inputted image belongs, the classification loss generated by each image classification sub-model will affect the accuracy of the image classification model for classifying. For this reason, the result for summing the classification losses of each image classification sub-model is used as the classification loss of the image classification model, so that the classification loss of the image classification model can more accurately reflect the classification deviation of the image classification model. Then, the classification loss of the image classification model is used to tune the model parameter of the image classification model, which is beneficial to improving the classification accuracy of the image classification model.

The method for training the image classification model provided by the embodiment of the present application, under the semi-supervised learning framework, discriminating each image of the image set by using each image classification sub-model of the image classification model separately, and determining multiple classification reference information of each image, and one classification reference information corresponds to an image classification sub-model. Then, each image classification sub-model is used as a target image classification sub-model, and determining the classification loss of the target image classification sub-model based on the classification reference information of the target image classification sub-model corresponding to the labeled images of the image set, the category label of the labeled image, and the classification reference information of another image classification sub-model corresponding to the unlabeled images of the image set. That is, using the information learned by the target image classification model from the image set to provide guidance for another target image classification sub-model, and changing the one-way teacher-student relationship between each target image classification sub-model of the image classification model into the mutual teacher-student relationship. Furthermore, tuning the model parameter of the image classification model based on the classification loss of each target image classification sub-model of the image classification model can make full use of the mutual teacher-student relationship between each target image classification sub-model, and allow complementary learning and teaching between each image classification sub-models, so that the information of the image set can be fully explored and utilized, thereby improving the training effect of the image classification model and obtaining a more accurate and reliable image classification model.

The above embodiment introduces the method for training the image classification model. Through the above method, the image classification model for different application scenarios can be trained. For different application scenarios, the image set used to train the image classification model and the label of each image of the image can be selected according to the application scenario. Application scenarios applicable to the method provided by the embodiments of the present application may include, but are not limited to, detecting a target, classifying a facial expression, classifying an animal in the nature, recognizing digital handwritten and other scenarios. Taking the application scenario of classifying an animal in the nature as an example, the category label of the labeled image is used to mark the target object of the labeled image and the category to which the target object belongs, such as cats, dogs, horses, etc. As provided by the above embodiments of the present application, the image classification model trained by the method can detect the area where the target object is located in the image to be processed and identify the category to which the target object belongs.

Based on the method for training the image classification model disclosed in the above embodiments of the present application, the trained image classification model can be applied to any scene that requires discrimination of images. The application process based on the image classification model is described in detail below.

Embodiments of the present application also provide an image classification method using an image classification model, which can discriminate images to be processed based on the image classification model trained by the above method.

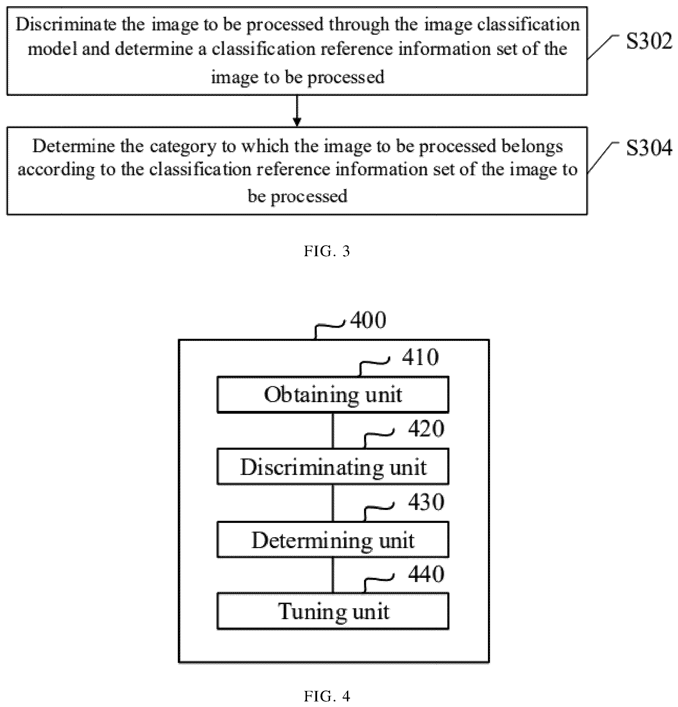

Please refer to FIG. 3, is a schematic diagram of a flowchart of an image classification method provided by another embodiment of the present application. The method may include the following steps:

S302, discriminating the image to be processed through the image classification model and determining a classification reference information set of the image to be processed.

Among them, the classification reference information set of the image to be processed includes the first target classification reference information of the image to be processed and the second target classification reference information of the image to be processed. The image classification model includes a first image classification sub-model and a second image classification sub-model. The first image classification sub-model is used to discriminate the image to be processed and determine the first target classification reference information of the image to be processed. The second image classification sub-model is used to discriminate the image to be processed and determine the second target classification reference information of the image to be processed.

S304, determining the category to which the image to be processed belongs according to the classification reference information set of the image to be processed.

In an embodiment of the present application, the category to which the image to be processed can be determined based on the classification reference information of the image to be processed of any one of the image classification sub-models. For example, the category corresponding to the maximum probability of the first target classification reference information of the image to be processed can be determined as the category to which the image to be processed belongs, or the category corresponding to the maximum probability of the second target classification reference information of the image to be processed can also be determined as the category to which the image to be processed belongs.

In an embodiment of the present application, the above classification reference information of the image to be processed can also be combined to determine the category to which the image to be processed belongs. For example, if a category corresponding to the maximum classification probability of the first target classification reference information of the image to be processed is the same as the category corresponding to the maximum classification probability of the second target classification reference information of the image to be processed, then the category can be determined as the category to which the image to be processed belongs. For another example, the category to which the image to be processed belongs can be determined based on an overlap between a first target category set of the first target category reference information of the image to be processed and a second target category set of the second target category reference information of the image to be processed. The first target category set includes categories corresponding to the probabilities exceeding the preset probability threshold of the first target classification reference information, and the second target category set includes categories corresponding to the probabilities exceeding the preset probability of the second target classification reference information, and so on.

The image classification method provided by the embodiments of the present application is based on the semi-supervised learning method and utilizes the mutual teacher-student relationship between each image classification sub-model through complementary learning and teaching between each image classification sub-model. So that the image classification model has high accuracy and reliability. Furthermore, using the image classification model to discriminate the images to be processed will help to improve the accuracy and reliability of the results for classifying the images.

The foregoing describes specific embodiments of the specification. Other embodiments are within the scope of the appended claims. In some cases, the actions or steps recited in the claims can be performed in a different order than in the embodiments and still achieve the desired results. Additionally, the processes depicted in the drawings do not necessarily require the specific order as shown, or sequential order, to achieve desirable results. Multitasking and parallel processing are also possible or may be advantageous in certain implementations.

In addition, corresponding to the method for training the image classification model shown in FIG. 1, embodiments of the present application also provide a device for training the image classification model. Please refer to FIG. 4, is a schematic diagram of a structural of a device 400 for training an image classification model provided by an embodiment of the present application. The device 400 includes an obtaining unit 410, used to obtain an image set used for training an image classification model, the image set includes a labeled image, an un-labeled images and a category label corresponding to the labeled image; a discriminating unit 420, used to discriminate the labeled image and unlabeled image by a target image classification sub-model of the image classification model, and determine first classification reference information of the labeled image and first classification reference information of the unlabeled image, the target image classification sub-model may be a first image classification sub-model or a second image classification sub-model; a determining unit 430, used to determine the classification loss of the target image classification sub-model according to the first classification reference information of the labeled image, the category label of the labeled image, and the second classification reference information of the unlabeled image, the second classification reference information of the unlabeled images is determined by discriminating the unlabeled images by a non-target image classification sub-module of the image classification model, the non-target image classification sub-module is the other image classification sub-model of the image classification model, except for the target image classification sub-model, the classification loss of the target image classification sub-model refers to the classification loss of the first image classification sub-model or the classification loss of the second image classification sub-model; a tuning unit 440, used to tune the model parameter of the image classification model based on a classification loss of the first image classification sub-model and a classification loss of the second image classification sub-model.

In an embodiment of the present application, the obtaining unit is also used to obtain an initial unlabeled image.

The device 400 further includes: an augmenting unit, configured to obtain the unlabeled image by performing the data augmentation processing of various augmentation levels on the initial unlabeled image. There are multiple unlabeled images, each of the unlabeled images corresponding to one augmentation level.

In an embodiment of the present application, the unlabeled images include a first type of the unlabeled image and a second type of the unlabeled image, and a augmentation level of the first type of the unlabeled image is lower than a augmentation level of the second unlabeled image.

The determining unit determines the classification loss of the target image classification sub-model based on the first classification reference information of the labeled image, the category label of the labeled image, and the second classification reference information of the unlabeled image, including: generating a first type of the pseudo label of the first type of the unlabeled image according to the second classification reference information of the first type of the unlabeled image; determining the unsupervised loss of the target image classification sub-model according to the first classification reference information of the second type of the unlabeled image and the first type of the pseudo label of the first type of the unlabeled image; determining the supervised loss of the target image classification sub-model according to the first classification reference information of the labeled image and the category label of the labeled image; determining the classification loss of the target image classification sub-model according to the unsupervised loss of the target image classification sub-model and the supervised loss of the target image classification sub-model.

In an embodiment of the present application, the determining unit is further configured to determine a loss weight of the first type of the unlabeled image according to the first type of the pseudo label of the first type of the unlabeled image and the second type of the pseudo label of the first type of the unlabeled image before determining the unsupervised loss of the target image classification sub-model according to the first classification reference information of the second type of the unlabeled image and the first type of the pseudo label of the first type of the unlabeled image. Among them, the second type of the pseudo label of the first type of the unlabeled image is generated based on the first classification reference information of the first type of the unlabeled image.

The determining unit determines the unsupervised loss of the target image classification sub-model according to the first classification reference information of the second type of the unlabeled image and the first type of the pseudo label of the first type of the unlabeled image, including: determining the unsupervised sub-loss of the first type of the unlabeled image according to the first classification reference information of the second type of the unlabeled image and the first type of the pseudo label of the first type of the unlabeled image, and determining the unsupervised loss of the target image classification sub-model according to the loss weight of the first type of the unlabeled image and the unsupervised sub-loss of the first type of the unlabeled image.

In an embodiment of the present application, the first type of the pseudo label of the first type of the unlabeled image may be used to indicate a first target object area of the first type of the unlabeled image and a predicted category to which the first target object area belongs. The second type of the pseudo label of the first type of the unlabeled image may be used to indicate a second target object area of the first type of the unlabeled image, and a predicted category to which the second target object area belongs.

The determining unit is further configured to determine a loss weight of the first type of the unlabeled image according to the first type of the pseudo label of the first type of the unlabeled image and the second type of the pseudo label corresponding to the first type of the unlabeled image, including: determining the intersection ratio between the first target object area and the second target object area, and comparing the predicted category to which the first target object area belongs with the prediction category to which the second target object area belongs to, and determining the comparison result, and determining the loss weight of the first type of the unlabeled image according to the intersection ratio and the comparison result.

In an embodiment of the present application, the determining unit determines the loss weight of the first type of the unlabeled image according to the intersection ratio and the comparison result, including: if the intersection ratio is less than or equal to a preset ratio or if the comparison result indicates that the predicted category to which the first target object area belongs is different from the predicted category to which the second target object area belongs, it is determined that the loss weight of the first unlabeled image is a first preset weight; if the intersection ratio is greater than the preset ratio, and if the comparison result indicates that the predicted category to which the first target object area belongs is the same as the predicted category to which the second target object area belongs, it is determined that the loss weight of the first unlabeled image is a second preset weight.

In an embodiment of the present application, the first classification reference information of the first type of the unlabeled image and the second classification reference information of the first type of the unlabeled image both include the probability that the first type of the unlabeled image is identified as belonging to each of the multiple preset categories.

The determining unit generates the first type of the pseudo label of the first type of the unlabeled image according to the second classification reference information of the first type of the unlabeled image, including: determining the preset category corresponding to the maximum probability from the multiple preset categories according to the second classification reference information of the first type of the unlabeled image; generating the first type of the pseudo label of the first type of the unlabeled image according to the preset category corresponding to the maximum probability.

In an embodiment of the present application, the tuning unit tunes the model parameter of the image classification model according to the classification loss of the first image classification sub-model and the classification loss of the second image classification sub-model, including: summing the classification loss of the first image classification sub-model and the classification loss of the second image classification sub-model by using a weighted summation and determining the classification loss of the image classification model; tuning the model parameter of the image classification model according to the classification loss of the image classification model by suing a back propagation algorithm.

Obviously, the device for training the image classification model provided by the embodiment of the present application can be used as an execution subject of the method for training the image classification model shown in FIG.1. For example, step S102 of the method for training the image classification model shown in FIG. 1 can be executed by the obtaining unit of the device for training the image classification model shown in the FIG. 4. Step S104 can be executed by the discriminating unit of the device for training the image classification model. Step S106 can be executed by the determining unit of the device for training the image classification model. Step S108 can be executed by the tuning unit of the device for training the image classification model.

According to another embodiment of the present application, each unit of the device for training the image classification model shown in FIG. 4 can be separately or entirely formed by combining into one or several other units, or formed by some of the units, which can also be further divided into multiple units with smaller functions, which can achieve the same operation without affecting the realization of the technical effects of the embodiments of the present application. The above units are divided based on logical functions. In practical applications, the function of one unit can also be realized by multiple units, or the functions of multiple units can be realized by one unit. In other embodiments of the present application, the device for training the image classification model may also include other units. In practical applications, these functions may also be implemented with the assistance of other units and may be implemented by multiple units in cooperation.

According to another embodiment of the present application, the device for training the image classification model shown in FIG. 4 can be constructed by running a computer program (including program code) capable of executing each step involved in the corresponding method shown in FIG. 1 on a general-purpose computing device of a computer, which includes the processing components and storage components such as a central processing unit, a random access memory, a read-only memory, and so on, to implement the method for training the image classification model in the embodiment of the present application. The computer program can be recorded on, for example, a computer-readable storage medium, and can be reproduced in an electronic device through the computer-readable storage medium and run therein.

The device for training the image classification model provided by the embodiment of the present application, under the semi-supervised learning framework, discriminating each image of the image set by using each image classification sub-model of the image classification model separately, and determining multiple classification reference information of each image, and one classification reference information corresponds to an image classification sub-model. Then, each image classification sub-model is used as a target image classification sub-model, and determining the classification loss of the target image classification sub-model according to the classification reference information of the target image classification sub-model corresponding to the labeled images of the image set, the category label of the labeled image, and the classification reference information of another image classification sub-model corresponding to the unlabeled images of the image set. That is, using the information learned by the target image classification model from the image set to provide guidance for another target image classification sub-model, and changing the one-way teacher-student relationship between each target image classification sub-model of the image classification model into the mutual teacher-student relationship. Furthermore, tuning the model parameters of the image classification model according the classification loss of each target image classification sub-model of the image classification model can make full use of the mutual teacher-student relationship between each target image classification sub-model, and allow complementary learning and teaching between each image classification sub-models, so that the information of the image set can be fully explored and utilized, thereby improving the training effect of the image classification model and obtaining a more accurate and reliable image classification model.

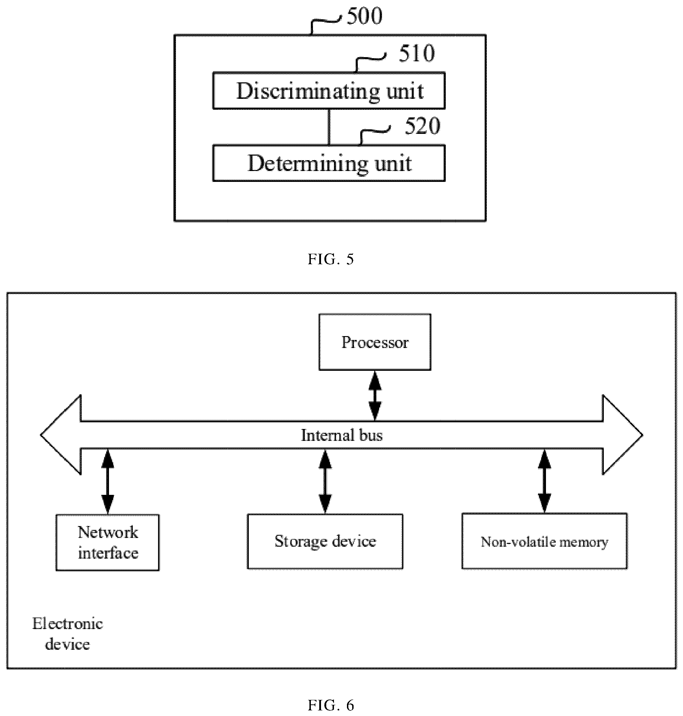

In addition, corresponding to the image classification method shown in FIG. 3, the embodiment of the present application also provides an image classification device. Please refer to FIG.5, which is a schematic structural diagram of an image classification device 500 provided in an embodiment of the present application. The device 500 includes: a discriminating unit 510, configured to obtain the classification reference information set of the image to be processed by discriminating the image to be processed through the image classification model. The classification reference information set includes the first target classification reference information and the second target classification reference information. The image classification model includes the first image classification sub-model and the second image classification sub-model. The first image classification sub-model is used to obtain the first target classification reference information by discriminating the image to be processed. The second image classification sub-model is used to obtain the second target classification reference information by discriminating the image to be processed. The determining unit 520 is used to determine the category to which the image to be processed belongs according to the classification reference information set of the image to be processed.

Obviously, the image classification device provided by the embodiment of the present application can be used as an execution subject of the image classification method shown in FIG.3. For example, step S302 of the image classification method shown in FIG. 3 can be executed by the discriminating unit of the image classification device shown in the FIG. 5. Step S304 can be executed by the determining unit of the image classification device.

According to another embodiment of the present application, each unit of the image classification device shown in FIG. 5 can be separately or entirely formed by combining into one or several other units, or formed by some of the units, which can also be further divided into multiple units with smaller functions, which can achieve the same operation without affecting the realization of the technical effects of the embodiments of the present application. The above units are divided based on logical functions. In practical applications, the function of one unit can also be realized by multiple units, or the functions of multiple units can be realized by one unit. In other embodiments of the present application, the device for training the image classification model may also include other units. In practical applications, these functions may also be implemented with the assistance of other units and may be implemented by multiple units in cooperation.

According to another embodiment of the present application, The image classification device shown in FIG. 5 can be constructed by running a computer program (including program code) capable of executing each step involved in the corresponding method shown in FIG. 3 on a general-purpose computing device of a computer, which includes the processing components and storage components such as a central processing unit, a random access memory, a read-only memory, and so on, to implement the method for training the image classification model in the embodiment of the present application. The computer program can be recorded on, for example, a computer-readable storage medium, and can be reproduced in an electronic device through the computer-readable storage medium and run therein.

The image classification device provided by the embodiments of the present application is based on the semi-supervised learning method and utilizes the mutual teacher-student relationship between each image classification sub-model through complementary learning and teaching between each image classification sub-model. So that the image classification model has high accuracy and reliability. Furthermore, using the image classification model to discriminate the images to be processed will help to improve the accuracy and reliability of the results for classifying the images.

FIG. 6 is a schematic structural diagram of an electronic device according to an embodiment of the present application. Please refer to FIG. 6. for the hardware, the electronic device includes a processor and optionally an internal bus, a network interface, and a storage device. Among them, the storage device may include an internal storage, such as high-speed random-access memory, or may also include a non-volatile memory, such as at least one disk memory. Of course, the electronic device may also include other hardware required by the business.

The processor, the network interface and the storage device can be connected to each other through the internal bus, which can be an industry standard architecture (ISA) bus, a peripheral component interconnect (PCI) standard bus or an extended industry standard architecture (EISA) bus, etc. The bus can be distinguished as an address bus, a data bus, a control bus, etc. For ease of presentation, only one bidirectional arrow is used in FIG. 6, but it does not mean that there is only one bus or one type of bus.

The storage device, used to store programs. Specifically, a program may include program code including computer operating instructions. The storage device may include an internal memory and a non-volatile memory and provides instructions and data to the processor.

The processor reads the corresponding computer program from the non-volatile memory into the storage device and then runs it, forming the device for training the image classification model by logical. The processor executes the program stored in the storage device and is specifically used to perform the following operations: obtain an image set used for training an image classification model, the image set includes a labeled image, an un-labeled images and a category label of the labeled image; discriminate the labeled image and unlabeled image through a target image classification sub-model of the image classification model and determine first classification reference information of the labeled image and first classification reference information of the unlabeled image , the target image classification sub-model may be a first image classification sub-model or a second image classification sub-model; determine the classification loss of the target image classification sub-model according to the first classification reference information of the labeled image, the category label of the labeled image, and the second classification reference information of the unlabeled image, the second classification reference information of the unlabeled images is obtained by discriminating the unlabeled images by a non-target image classification sub-module of the image classification model, the non-target image classification sub-module is the other image classification sub-model of the image classification model, except for the target image classification sub-model, the classification loss of the target image classification sub-model refers to the classification loss of the first image classification sub-model or the classification loss of the second image classification sub-model; tune the model parameter of the image classification model according to a classification loss of the first image classification sub-model and a classification loss of the second image classification sub-model.

Alternatively, the processor reads the corresponding computer program from the non-volatile memory into the storage device and then runs it to form an image classification device by logical. The processor executes the program stored in the storage device and is specifically used to perform the following operations: discriminate an image to be processed by an image classification model determining a classification reference information set of the image to be processed, the classification reference information set includes the first target classification reference information and the second target classification reference information; the image classification model includes the first image classification sub-model and the second image classification sub-model; the first image classification sub-model is used to obtain the first target classification reference information via discriminating the image to be processed; the second image classification sub-model is used to obtain the second target classification reference information via discriminating the image to be processed; determine the category to which the image to be processed belongs based on the classification reference information set of the image to be processed.

The method performed by the device for training the image classification model presented in the embodiment shown in FIG. 1 of the present application or the method performed by the image classification device presented in the embodiment shown in FIG. 3 of the present application can be applied to the processor or implemented by the processor. The processor may be an integrated circuit chip that has signal processing capabilities. During the implementation process, each step of the above method can be completed by instructions in the form of hardware integrated logic circuits or software in the processor. The above-mentioned processor can be a general-purpose processor, including a central processing unit, a network processor, etc. it can also be a digital signal processor, an application specific integrated circuit, a field-programmable gate array or other programmable logic devices, a discrete gate or a transistor logic device, and discrete hardware components. Each method, step and logical block diagram presented in the embodiment of this application can be implemented or executed. A general-purpose processor may be a micro-processor, or the processor may be any conventional processor, etc. The steps of the method presented in conjunction with the embodiments of the present application can be directly implemented by a hardware decoding processor or executed by a combination of hardware and software modules in the decoding processor. The software module can be located in a random-access memory, a flash memory, a read-only memory, a programmable read-only memory or an electrically erasable programmable memory, registers and other mature storage media in this field. The storage medium is located in the memory, and the processor reads the information in the memory and completes the steps of the above method in combination with its hardware.

The electronic device can also perform the method in FIG. 1 and implement the functions of the device for training the image classification model in the embodiments shown in FIG. 1 and FIG. 2. Alternatively, the electronic device can also perform the method in FIG. 3 and implement the image classification device. The functions of the embodiment shown in FIG. 3 will not be described again in the embodiment of this application.

Of course, except for the implementation of software, the electronic device of the present application does not exclude other implementations, such as logic devices or a combination of software and hardware, etc. That is to say, the execution subject of the following processing flow is not limited to each logical unit. It can also be hardware or logic devices.

Embodiments of the present application also provide a computer-readable storage medium that stores one or more programs, and the one or more programs include instructions that, when executed by a portable electronic device including multiple application programs, enable the portable electronic device perform the method of the embodiment shown in FIG. 1, and is specifically used to perform the following operations: obtaining an image set used for training an image classification model, the image set includes a labeled image, an un-labeled images and a category label of the labeled image; discriminate the labeled image and unlabeled image by a target image classification sub-model of the image classification model, and determine first classification reference information of the labeled image and first classification reference information of the unlabeled image, the target image classification sub-model may be a first image classification sub-model or a second image classification sub-model; determine the classification loss of the target image classification sub-model according to the first classification reference information of the labeled image, the category label of the labeled image, and the second classification reference information of the unlabeled image, discriminating the unlabeled image by a non-target image classification sub-module of the image classification model, and determining second classification reference information of the unlabeled image, the non-target image classification sub-module is the other image classification sub-model of the image classification model, except for the target image classification sub-model, the classification loss of the target image classification sub-model refers to the classification loss of the first image classification sub-model or the classification loss of the second image classification sub-model; tuning a model parameter of the image classification model according to the classification loss of the first image classification sub-model and the classification loss of the second image classification sub-model.

Alternatively, the computer-readable storage medium stores one or more programs, and the one or more programs include instructions that, when executed by a portable electronic device including a plurality of application programs, enable the portable electronic device to perform the steps shown in FIG. 3. The method of the embodiment is specifically used to perform the following operations: obtain the classification reference information set of the image to be processed by classifying and identifying the image to be processed through the image classification model, the classification reference information set includes the first target classification reference information and the second target classification reference information; the image classification model includes the first image classification sub-model and the second image classification sub-model; the first image classification sub-model is used to obtain the first target classification reference information by classifying and identifying the image to be processed; the second image classification sub-model is used to obtain the second target classification reference information by classifying and identifying the image to be processed; determine the category to which the image to be processed belongs based on the classification reference information set of the image to be processed.

In short, the above descriptions are only preferred embodiments of the present application and are not intended to limit the protection scope of the present application. Any modifications, equivalent replacements, improvements, etc. made within the principles of the present application shall be included in the protection scope of the present application, which is defined in the appended claims.

The systems, devices, modules or units described in the above embodiments may be implemented by computer chips or entities, or by products with certain functions. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or a combination of any of these devices.

Computer-readable media includes both persistent and non-volatile, removable and non-removable media that can be implemented by any method or technology for storage of information. Information may be computer-readable instructions, data structures, modules of programs, or other data. Example of computer storage media include, but is not limited to, a phase change memory, a static random access memory, a dynamic random access memory, other type of random access memory, and a read-only memory, an electrically erasable programmable read-only memory, a flash memory or other memory technology, a compact disc read-only memory, a digital versatile disc or other optical storage, a magnetic tape cassette, a tape disk storage or other magnetic storage device or any other non-transmission medium can be used to store information that can be accessed by a computing device. As defined in the present application, a computer-readable media does not include a transitory media, such as modulated data signals and carrier waves.

It should also be noted that the terms "comprise," "include," or any other variation thereof are intended to cover a non-exclusive inclusion, such that a process, method, article, or apparatus that includes a list of elements not only includes those elements, but also includes other elements are not expressly listed or are inherent to the process, method, article or equipment. Without further limitation, an element defined by the statement "include a..." does not exclude the presence of additional identical elements in a process, a method, an article, or a device that includes the stated element.

Each embodiment in the specification is described in a progressive manner. The same and similar parts between the various embodiments can be referred to each other. Each embodiment focuses on its differences from other embodiments. For the system embodiment, since it is basically similar to the method embodiment, the description is relatively simple. For relevant details, please refer to the partial description of the method embodiment.

## Claims

1. A method for training an image classification model, comprising:

   obtaining an image set used for training the image classification model, the image set comprises a labeled image, an unlabeled image and a category label of the labeled image;
   discriminating the labeled image and the unlabeled image by a target image classification sub-model of the image classification model, and determining first classification reference information of the labeled image and first classification reference information of the unlabeled image;
   discriminating the unlabeled image by a non-target image classification sub-module of the image classification model, and determining second classification reference information of the unlabeled image;
   determining a classification loss of the target image classification sub-model according to the first classification reference information of the labeled image, the category label of the labeled image, the first classification reference information of the unlabeled image and the second classification reference information of the unlabeled image, a classification loss of the image classification model comprises the classification loss of the target image classification sub-model and a classification loss of the non-target image classification sub-model;
   tuning a model parameter of the image classification model according to the classification loss of the target image classification sub-model and the classification loss of the non-target image classification sub-model;

wherein the unlabeled images comprise a first type of the unlabeled image and a second type of the unlabeled image, and an augmentation level of the first type of the unlabeled image is lower than an augmentation level of the second type of the unlabeled image;

the determining the classification loss of the target image classification sub-model according to the first classification reference information of the labeled image, the category label of the labeled image, the first classification reference information of the unlabeled image and the second classification reference information of the unlabeled image comprises:

generating a first type of the pseudo label of the first type of the unlabeled image according to the second classification reference information of the first type of the unlabeled image;

determining an unsupervised loss of the target image classification sub-model according to the first classification reference information of the second type of the unlabeled image and the first type of the pseudo label of the first type of the unlabeled image;

determining a supervised loss of the target image classification sub-model according to the first classification reference information of the labeled image and the category label of the labeled image;

determining the classification loss of the target image classification sub-model according to the unsupervised loss of the target image classification sub-model and the supervised loss of the target image classification sub-model;

wherein before determining the unsupervised loss of the target image classification sub-model according to the first classification reference information of the second type of the unlabeled image and the first type of the pseudo label of the first type of the unlabeled image, the method further comprises:

determining a loss weight of the first type of the unlabeled image according to the first type of the pseudo label of the first type of the unlabeled image and the second type of the pseudo label of the first type of the unlabeled image, the second type of the pseudo label of the first type of the unlabeled image is generated according to the first classification reference information of the first type of the unlabeled image;

wherein determining the unsupervised loss of the target image classification sub-model according to the first classification reference information of the second type of the unlabeled image and the first type of the pseudo label of the first type of the unlabeled image comprises:

determining an unsupervised sub-loss of the first type of the unlabeled image according to the first classification reference information of the second type of the unlabeled image and the first type of the pseudo label of the first type of the unlabeled image;

determining the unsupervised loss of the target image classification sub-model according to the loss weight of the first type of the unlabeled image and the unsupervised sub-loss of the first type of the unlabeled image.

2. The method according to claim 1, wherein the method further comprises:

obtaining an initial unlabeled image;

performing data augmentation processing on the initial unlabeled image via different augmentation levels, the number of the unlabeled images is more than one, each of the unlabeled images corresponding to one of the different augmentation levels.

3. The method according to claim 1 or 2, wherein the first type of the pseudo label of the first type of the unlabeled image is used to indicate a first target object area of the first type of the unlabeled image and a predicted category to which the first target object area belongs, the second type of the pseudo label of the first type of the unlabeled image is used to indicate a second target object area of the first type of the unlabeled image and a predicted category to which the second target object area belongs;

wherein determining the loss weight of the first type of the unlabeled image based on the first type of the pseudo label of the first type of the unlabeled image and the second type of the pseudo label of the first type of the unlabeled image comprises:

determining an intersection ratio between the first target object area and the second target object area, and comparing a predicted category to which the first target object area belongs with a prediction category to which the second target object area belongs and determining a comparison result;

determining the loss weight of the first type of the unlabeled image according to the intersection ratio and the comparison result.

4. The method according to claim 3, wherein determining the loss weight of the first type of the unlabeled image according to the intersection ratio and the comparison result comprises:

in response that the intersection ratio is less than or equal to a preset ratio or in response that the comparison result indicates that the predicted category to which the first target object area belongs is different from the predicted category to which the second target object area belongs, determining the loss weight of the first type of the unlabeled image as a first preset weight;

in response that the intersection ratio is greater than the preset ratio, and in response that the comparison result indicates that the predicted category to which the first target object area belongs is the same as the predicted category to which the second target object area belongs, determining the loss weight of the first type of the unlabeled image as a second preset weight, wherein the second preset weight is greater than the first preset weight.

5. The method according to claim 1 or 2, wherein the first classification reference information of the first type of the unlabeled image and the second classification reference information of the first type of the unlabeled image both comprise a probability that the first type of the unlabeled image is identified as belonging to each of a plurality of the preset categories;

wherein generating the first type of the pseudo label of the first type of the unlabeled image according to the second classification reference information of the first type of the unlabeled image comprises:

determining a preset category corresponding to a maximum probability from the plurality of preset categories according to the second classification reference information of the first type of the unlabeled image; and

generating the first type of the pseudo label of the first type of the unlabeled image according to the preset category corresponding to the maximum probability in response that the maximum probability is greater than a preset probability threshold.

6. The method according to any one of claims 1-5, wherein tuning the model parameter of the image classification model according to the classification loss of the target image classification sub-model and the classification loss of the non-target image classification sub-model comprises:

summing the classification loss of the target image classification sub-model and the classification loss of the non-target image classification sub-model by using a weighted summation and determining the classification loss of the image classification model;

tuning the model parameter of the image classification model according to the classification loss of the image classification model by suing a back propagation algorithm.

7. An image classification method, comprising:

discriminating an image to be processed by an image classification model and determining a classification reference information set of the image to be processed, wherein, the classification reference information set comprises first target classification reference information and second target classification reference information, the image classification model comprises a target image classification sub-model and a non-target image classification sub-model, the target image classification sub-model is used to discriminate the image to be processed and determine the first target classification reference information, the non-target image classification sub-model is used to discriminate the image to be processed and determine the second target classification reference information, the image classification model is trained according to the method described in any one of claims 1 to 6;

determining a category to which the image to be processed belongs according to the classification reference information set of the image to be processed.

8. An electronic device, comprising:

a processor;

a storage device for storing instructions executable by the processor;

wherein, the processor is configured for executing the instructions to implement the method as claimed in any one of claims 1 to 6; or, the processor is configured for executing the instructions to implement the method according to claim 7.

9. A computer-readable storage medium that, when instructions in the storage medium are executed by a processor of an electronic device, the electronic device is caused to perform the method according to any one of claims 1 to 6; or the processor is configured for executing the instructions to implement the method of claim 7.

**Patentansprüche**

1. Verfahren zum Trainieren eines Bildklassifizierungsmodells, umfassend:

Erhalten eines Bildsatzes, der zum Trainieren des Bildklassifizierungsmodells verwendet wird, wobei der Bildsatz ein beschriftetes Bild, ein nicht beschriftetes Bild und eine Kategoriebeschriftung des beschrifteten Bildes umfasst;
Unterscheiden des beschrifteten Bildes und des nicht beschrifteten Bildes durch ein Zielbild-Klassifizierungsuntermodell des Bildklassifizierungsmodells und Bestimmen der ersten Klassifizierungs-Referenzinformation des beschrifteten Bildes und der ersten Klassifizierungs-Referenzinformation des nicht beschrifteten Bildes;
Unterscheiden des nicht beschrifteten Bildes durch ein Nicht-Zielbild-Klassifizierungsuntermodul des Bildklassifizierungsmodells und Bestimmen der zweiten Klassifizierungs-Referenzinformation des nicht beschrifteten Bildes;
Bestimmen eines Klassifizierungsverlustes des Zielbild-Klassifizierungsuntermodells gemäß der ersten Klassifizierungs-Referenzinformation des beschrifteten Bildes, der Kategoriebezeichnung des markierten Bildes, der ersten Klassifizierungs-Referenzinformation des nicht beschrifteten Bildes und der zweiten Klassifizierungs-Referenzinformation des nicht beschrifteten Bildes, wobei ein Klassifizierungsverlust des Bildklassifizierungsmodells den Klassifizierungsverlust des Zielbild-Klassifizierungsuntermodells und einen Klassifizierungsverlust des Nicht-Zielbild-Klassifizierungsuntermodells umfasst;
Abstimmen eines Modellparameters des Bildklassifizierungsmodells gemäß dem Klassifizierungsverlust des Zielbild-Klassifizierungsuntermodells und dem Klassifizierungsverlust des Nicht-Zielbild-Klassifizierungsuntermodells;
wobei die nicht beschrifteten Bilder einen ersten Typ des nicht beschrifteten Bildes und einen zweiten Typ des nicht beschrifteten Bildes umfassen und eine Erweiterungsstufe des ersten Typs des nicht beschrifteten Bildes niedriger als eine Erweiterungsstufe des zweiten Typs des nicht beschrifteten Bildes ist;
das Bestimmen des Klassifizierungsverlusts des Zielbild-Klassifizierungsuntermodells gemäß der ersten Klassifizierungs-Referenzinformation des beschrifteten Bildes, der Kategoriebeschriftung des beschrifteten Bildes, der ersten Klassifizierungs-Referenzinformation des nicht beschrifteten Bildes und der zweiten Klassifizierungs-Referenzinformation des nicht beschrifteten Bildes Folgendes umfasst:

Erzeugen eines ersten Typs der Pseudobeschriftung des ersten Typs des nicht beschrifteten Bildes gemäß der zweiten Klassifizierungs-Referenzinformation des ersten Typs des nicht beschrifteten Bildes;
Bestimmen eines nicht überwachten Verlustes des Zielbild-Klassifizierungsuntermodells gemäß der ersten Klassifizierungs-Referenzinformation des zweiten Typs des nicht beschrifteten Bildes und des ersten Typs der Pseudobeschriftung des ersten Typs des nicht beschrifteten Bildes;
Bestimmen eines überwachten Verlustes des Zielbild-Klassifizierungsuntermodells gemäß der ersten Klassifizierungs-Referenzinformation des beschrifteten Bildes und der Kategoriebeschriftung des beschrifteten Bildes;
Bestimmen des Klassifizierungsverlustes des Zielbild-Klassifizierungsuntermodells gemäß dem nicht überwachten Verlust des Zielbild-Klassifizierungsuntermodells und dem überwachten Verlust des Zielbild-Klassifizierungsuntermodells;
wobei das Verfahren vor dem Bestimmen des nicht überwachten Verlustes des Zielbild-Klassifizierungsuntermodells gemäß der ersten Klassifizierungs-Referenzinformation des zweiten Typs des nicht beschrifteten Bildes und des ersten Typs der Pseudobeschriftung des ersten Typs des nicht beschrifteten Bildes ferner Folgendes umfasst:

Bestimmen eines Verlustgewichts des ersten Typs des nicht beschrifteten Bildes gemäß dem ersten Typ der Pseudobeschriftung des ersten Typs des nicht beschrifteten Bildes und des zweiten Typs der Pseudobeschriftung des ersten Typs des nicht beschrifteten Bildes, wobei der zweite Typ der Pseudobeschriftung des ersten Typs des nicht beschrifteten Bildes gemäß der ersten Klassifizierungs-Referenzinformation des ersten Typs des nicht beschrifteten Bildes erzeugt wird;
wobei das Bestimmen des nicht überwachten Verlustes des Zielbild-Klassifizierungsuntermodells gemäß der ersten Klassifizierungs-Referenzinformation des zweiten Typs des nicht beschrifteten Bildes und des ersten Typs der Pseudobeschriftung des ersten Typs des nicht beschrifteten Bildes Folgendes umfasst:

Bestimmen eines nicht überwachten Unterverlustes des ersten Typs des nicht beschrifteten Bildes gemäß der ersten Klassifizierungs-Referenzinformation des zweiten Typs des nicht beschrifteten Bildes und des ersten Typs der Pseudobeschriftung des ersten Typs des nicht beschrifteten Bildes; Bestimmen des nicht überwachten Verlustes des Zielbild-Klassifizierungsuntermodells gemäß dem Verlustgewicht des ersten Typs des nicht beschrifteten Bildes und dem nicht überwachten Unterverlust des ersten Typs des nicht beschrifteten Bildes.

2. Verfahren nach Anspruch 1, wobei das Verfahren ferner umfasst:

Erhalten eines anfänglichen nicht beschrifteten Bildes; Durchführen einer Datenerweiterungsverarbeitung an dem anfänglichen nicht beschrifteten Bild über verschiedene Erweiterungsstufen, wobei die Anzahl der nicht beschrifteten Bilder mehr als eins beträgt, wobei jedes der nicht beschrifteten Bilder einer der verschiedenen Erweiterungsstufen entspricht.

3. Verfahren nach Anspruch 1 oder 2, wobei der erste Typ der Pseudobeschriftung des ersten Typs des nicht beschrifteten Bildes verwendet wird, um einen ersten Zielobjektbereich des ersten Typs des nicht beschrifteten Bildes und eine vorhergesagte Kategorie anzugeben, zu der der erste Zielobjektbereich gehört, der zweite Typ der Pseudobeschriftung des ersten Typs des nicht beschrifteten Bildes verwendet wird, um einen zweiten Zielobjektbereich des ersten Typs des nicht beschrifteten Bildes und eine vorhergesagte Kategorie anzugeben, zu der der zweite Zielobjektbereich gehört; wobei das Bestimmen des Verlustgewichts des ersten Typs des nicht beschrifteten Bildes auf Grundlage des ersten Typs der Pseudobeschriftung des ersten Typs des nicht beschrifteten Bildes und des zweiten Typs der Pseudobeschriftung des ersten Typs des nicht beschrifteten Bildes Folgendes umfasst:

Bestimmen eines Schnittpunktverhältnisses zwischen dem ersten Zielobjektbereich und dem zweiten Zielobjektbereich und Vergleichen einer vorhergesagten Kategorie, zu der der erste Zielobjektbereich gehört, mit einer Vorhersagekategorie, zu der der zweite Zielobjektbereich gehört, und Bestimmen eines Vergleichsergebnisses; Bestimmen des Verlustgewichts des ersten Typs des nicht beschrifteten Bildes gemäß dem Schnittpunktverhältnis und dem Vergleichsergebnis.

4. Verfahren nach Anspruch 3, wobei das Bestimmen des Verlustgewichts des ersten Typs des nicht beschrifteten Bildes gemäß dem Schnittpunktverhältnis und dem Vergleichsergebnis Folgendes umfasst:

als Reaktion darauf, dass das Schnittpunktverhältnis kleiner oder gleich einem voreingestellten Verhältnis ist, oder als Reaktion darauf, dass das Vergleichsergebnis angibt, dass die vorhergesagte Kategorie, zu der der erste Zielobjektbereich gehört, von der vorhergesagten Kategorie, zu der der zweite Zielobjektbereich gehört, verschieden ist, Bestimmen des Verlustgewichts des ersten Typs des nicht beschrifteten Bildes als ein erstes voreingestelltes Gewicht; als Reaktion darauf, dass das Schnittpunktverhältnis größer als das voreingestellte Verhältnis ist, und als Reaktion darauf, dass das Vergleichsergebnis angibt, dass die vorhergesagte Kategorie, zu der der erste Zielobjektbereich gehört, die gleiche wie die vorhergesagte Kategorie ist, zu der der zweite Zielobjektbereich gehört, Bestimmen des Verlustgewichts des ersten Typs des nicht beschrifteten Bildes als ein zweites voreingestelltes Gewicht, wobei das zweite voreingestellte Gewicht größer als das erste voreingestellte Gewicht ist.

5. Verfahren nach Anspruch 1 oder 2, wobei die erste Klassifizierungs-Referenzinformation des ersten Typs des nicht beschrifteten Bildes und die zweite Klassifizierungs-Referenzinformation des ersten Typs des nicht beschrifteten Bildes beide eine Wahrscheinlichkeit umfassen, dass der erste Typ des nicht beschrifteten Bildes als zu jeder einer Vielzahl der voreingestellten Kategorien gehörend identifiziert wird; wobei das Erzeugen des ersten Typs der Pseudobeschriftung des ersten Typs des nicht beschrifteten Bildes gemäß der zweiten Klassifizierungs-Referenzinformation des ersten Typs des nicht beschrifteten Bildes Folgendes umfasst: Bestimmen einer voreingestellten Kategorie, die einer maximalen Wahrscheinlichkeit entspricht, aus der Vielzahl von voreingestellten Kategorien gemäß der zweiten Klassifizierungs-Referenzinformation des ersten Typs des nicht beschrifteten Bildes; und Erzeugen des ersten Typs der Pseudobeschriftung des ersten Typs des nicht beschrifteten Bildes gemäß der voreingestellten Kategorie, die der maximalen Wahrscheinlichkeit entspricht, als Reaktion darauf, dass die maximale Wahrscheinlichkeit größer als ein voreingestellter Wahrscheinlichkeitsschwellenwert ist.

6. Verfahren nach einem der Ansprüche 1 bis 5, wobei das Abstimmen des Modellparameters des Bildklassifizierungsmodells gemäß dem Klassifizierungsverlust des Zielbild-Klassifizierungsuntermodells und dem Klassifizierungsverlust des Nicht-Zielbild-Klassifizierungsuntermodells Folgendes umfasst:

Summieren des Klassifizierungsverlustes des Zielbild-Klassifizierungsuntermodells und des Klassifizierungsverlustes des Nicht-Zielbild-Klassifizierungsuntermodells unter Verwendung einer gewichteten Summe und Bestimmen des Klassifizierungsverlustes des Bildklassifizierungsmodells;
Abstimmen des Modellparameters des Bildklassifizierungsmodells gemäß dem Klassifizierungsverlust des Bildklassifizierungsmodells durch Verfolgen eines Backpropagations-Algorithmus.

7. Bildklassifizierungsverfahren, umfassend:

Unterscheiden eines durch ein Bildklassifizierungsmodell zu verarbeitenden Bildes und Bestimmen eines Klassifizierungs-Referenzinformationssatzes des zu verarbeitenden Bildes, wobei der Klassifizierungs-Referenzinformationssatz erste Zielklassifizierungs-Referenzinformationen und zweite Zielklassifizierungs-Referenzinformationen umfasst, das Bildklassifizierungsmodell ein Zielbild-Klassifizierungsuntermodell und ein Nicht-Zielbild-Klassifizierungsuntermodell umfasst, das Zielbild-Klassifizierungsuntermodell verwendet wird, um das zu verarbeitende Bild zu unterscheiden und
die erste Zielklassifizierungs-Referenzinformation zu bestimmen, wobei das Nicht-Zielbild-Klassifizierungsuntermodell verwendet wird, um das zu verarbeitende Bild zu unterscheiden,
und
Bestimmen der zweiten Zielklassifizierungs-Referenzinformation, wobei das Bildklassifizierungsmodell gemäß dem in einem der Ansprüche 1 bis 6 beschriebenen Verfahren trainiert wird;
Bestimmen einer Kategorie, zu der das zu verarbeitende Bild gehört, gemäß dem Klassifizierungs-Referenzinformationssatz des zu verarbeitenden Bildes.

8. Elektronische Vorrichtung, umfassend:

einen Prozessor;
eine Speichervorrichtung zum Speichern von Anweisungen, die durch den Prozessor ausführbar sind;
wobei der Prozessor zum Ausführen der Anweisungen zum Implementieren des Verfahrens nach einem der Ansprüche 1 bis 6 konfiguriert ist; oder der Prozessor zum Ausführen der Anweisungen zum Implementieren des Verfahrens nach Anspruch 7 konfiguriert ist.

9. Computerlesbares Speichermedium, das, wenn Anweisungen in dem Speichermedium von einem Prozessor einer elektronischen Vorrichtung ausgeführt werden, dazu veranlasst wird, das Verfahren nach einem der Ansprüche 1 bis 6 durchzuführen; oder der Prozessor dazu konfiguriert ist, die Anweisungen auszuführen, um das Verfahren nach Anspruch 7 umzusetzen.

**Revendications**

1. Procédé pour entraîner un modèle de classification d'image, comprenant :

l'obtention d'un ensemble d'images utilisé pour entraîner le modèle de classification d'image,
l'ensemble d'images comprenant une image étiquetée, une image non étiquetée et une étiquette de catégorie de l'image étiquetée ;
la discrimination de l'image étiquetée et de l'image non étiquetée par un sous-modèle de classification d'image cible du modèle de classification d'image, et la détermination de premières informations de référence de classification de l'image étiquetée et de premières informations de référence de classification de l'image non étiquetée ;
la discrimination de l'image non étiquetée par un sous-module de classification d'image non-cible du modèle de classification d'image, et la détermination de secondes informations de référence de classification de l'image non étiquetée ;
la détermination d'une perte de classification du sous-modèle de classification d'image cible en fonction des premières informations de référence de classification de l'image étiquetée, de l'étiquette de catégorie de l'image étiquetée, des premières informations de référence de classification de l'image non étiquetée et des secondes informations de référence de classification de l'image non étiquetée, une perte de classification du modèle de classification d'image comprenant la perte de classification du sous-modèle de classification d'image cible et une perte de classification du sous-modèle de classification d'image non-cible ;

le réglage d'un paramètre de modèle du modèle de classification d'image en fonction de la perte de classification du sous-modèle de classification d'image cible et de la perte de classification du sous-modèle de classification d'image non-cible ;

dans lequel les images non étiquetées comprenant un premier type de l'image non étiquetée et un second type de l'image non étiquetée, et un niveau d'augmentation du premier type de l'image non étiquetée étant inférieur à un niveau d'augmentation du second type de l'image non étiquetée ;

la détermination de la perte de classification du sous-modèle de classification d'image cible en fonction des premières informations de référence de classification de l'image étiquetée, de l'étiquette de catégorie de l'image étiquetée, des premières informations de référence de classification de l'image non étiquetée et des secondes informations de référence de classification de l'image non étiquetée comprenant :

la génération d'un premier type de la pseudo-étiquette du premier type de l'image non étiquetée en fonction des secondes informations de référence de classification du premier type de l'image non étiquetée ;

la détermination d'une perte non supervisée du sous-modèle de classification d'image cible en fonction des premières informations de référence de classification du second type de l'image non étiquetée et du premier type de la pseudo-étiquette du premier type de l'image non étiquetée ;

la détermination d'une perte supervisée du sous-modèle de classification d'image cible en fonction des premières informations de référence de classification de l'image étiquetée et de l'étiquette de catégorie de l'image étiquetée ;

la détermination de la perte de classification du sous-modèle de classification d'image cible en fonction de la perte non supervisée du sous-modèle de classification d'image cible et de la perte supervisée du sous-modèle de classification d'image cible ;

dans lequel, avant de déterminer la perte non supervisée du sous-modèle de classification d'image cible en fonction des premières informations de référence de classification du second type de l'image non étiquetée et du premier type de la pseudo-étiquette du premier type de l'image non étiquetée, le procédé comprenant en outre :

la détermination d'un poids de perte du premier type de l'image non étiquetée en fonction du premier type de la pseudo-étiquette du premier type de l'image non étiquetée et du second type de la pseudo-étiquette du premier type de l'image non étiquetée, le second type de la pseudo-étiquette du premier type de l'image non étiquetée étant généré en fonction des premières informations de référence de classification du premier type de l'image non étiquetée ;

dans lequel la détermination de la perte non supervisée du sous-modèle de classification d'image cible en fonction des premières informations de référence de classification du second type de l'image non étiquetée et du premier type de la pseudo-étiquette du premier type de l'image non étiquetée comprenant :

la détermination d'une sous-perte non supervisée du premier type de l'image non étiquetée en fonction des premières informations de référence de classification du second type de l'image non étiquetée et du premier type de la pseudo-étiquette du premier type de l'image non étiquetée ;

la détermination de la perte non supervisée du sous-modèle de classification d'image cible en fonction du poids de perte du premier type de l'image non étiquetée et de la sous-perte non supervisée du premier type de l'image non étiquetée.

2. Procédé selon la revendication 1, dans lequel le procédé comprend en outre :

l'obtention d'une image non étiquetée initiale ;
la réalisation d'un traitement d'augmentation de données sur l'image non étiquetée initiale via différents niveaux d'augmentation, le nombre d'images non étiquetées étant supérieur à un, chacune des images non étiquetées correspondant à l'un des différents niveaux d'augmentation.

3. Procédé selon la revendication 1 ou 2, dans lequel le premier type de la pseudo-étiquette du premier type de l'image non étiquetée est utilisé pour indiquer une première zone d'objet cible du premier type de l'image non étiquetée et une catégorie prédite à laquelle appartient la première zone d'objet cible, le second type de la pseudo-étiquette du premier type de l'image non étiquetée étant utilisé pour indiquer une seconde zone d'objet cible du premier type de l'image non étiquetée et une catégorie prédite à laquelle appartient la seconde zone d'objet cible ;

dans lequel la détermination du poids de perte du premier type de l'image non étiquetée sur la base du premier type de la pseudo-étiquette du premier type de l'image non étiquetée et du second type de la pseudo-étiquette du premier type de l'image non étiquetée comprenant :

la détermination d'un rapport d'intersection entre la première zone d'objet cible et la seconde zone d'objet cible, et la comparaison d'une catégorie prédite à laquelle appartient la première zone d'objet cible avec une catégorie de prédiction à laquelle appartient la seconde zone d'objet cible et la détermination d'un résultat de comparaison ;

la détermination du poids de perte du premier type de l'image non étiquetée en fonction du rapport d'intersection et du résultat de comparaison.

4. Procédé selon la revendication 3, dans lequel la détermination du poids de perte du premier type de l'image non étiquetée en fonction du rapport d'intersection et du résultat de comparaison comprend :

en réponse au fait que le rapport d'intersection est inférieur ou égal à un rapport prédéfini ou en réponse au fait que le résultat de comparaison indique que la catégorie prédite à laquelle appartient la première zone d'objet cible est différente de la catégorie prédite à laquelle appartient la deuxième zone d'objet cible, la détermination du poids de perte du premier type de l'image non étiquetée en tant que premier poids prédéfini ;

en réponse au fait que le rapport d'intersection est supérieur au rapport prédéfini, et en réponse au fait que le résultat de comparaison indique que la catégorie prédite à laquelle appartient la première zone d'objet cible est la même que la catégorie prédite à laquelle appartient la seconde zone d'objet cible, la détermination du poids de perte du premier type de l'image non étiquetée en tant que second poids prédéfini, le second poids prédéfini étant supérieur au premier poids prédéfini.

5. Procédé selon la revendication 1 ou 2, dans lequel les premières informations de référence de classification du premier type de l'image non étiquetée et les secondes informations de référence de classification du premier type de l'image non étiquetée comprennent une probabilité que le premier type de l'image non étiquetée soit identifié comme appartenant à chaque catégorie d'une pluralité de catégories prédéfinies ;

dans lequel la génération du premier type de la pseudo-étiquette du premier type de l'image non étiquetée en fonction des secondes informations de référence de classification du premier type de l'image non étiquetée comprenant :

la détermination d'une catégorie prédéfinie correspondant à une probabilité maximale parmi la pluralité de catégories prédéfinies en fonction des secondes informations de référence de classification du premier type de l'image non étiquetée ; et

la génération du premier type de la pseudo-étiquette du premier type de l'image non étiquetée en fonction de la catégorie prédéfinie correspondant à la probabilité maximale en réponse au fait que la probabilité maximale est supérieure à un seuil de probabilité prédéfini.

6. Procédé selon l'une quelconque des revendications 1 à 5, dans lequel le réglage du paramètre de modèle du modèle de classification d'image en fonction de la perte de classification du sous-modèle de classification d'image cible et de la perte de classification du sous-modèle de classification d'image non-cible comprend :

l'addition de la perte de classification du sous-modèle de classification d'image cible et de la perte de classification du sous-modèle de classification d'image non-cible en utilisant une addition pondérée et en déterminant la perte de classification du modèle de classification d'image ;

le réglage du paramètre de modèle du modèle de classification d'image en fonction de la perte de classification du modèle de classification d'image en utilisant un algorithme de rétropropagation.

7. Procédé de classification d'image, comprenant :

la discrimination d'une image à traiter par un modèle de classification d'image et

la détermination d'un ensemble d'informations de référence de classification de l'image à traiter, dans lequel l'ensemble d'informations de référence de classification comprenant des premières informations de référence de classification cible et des secondes informations de référence de classification cible, le modèle de classification d'image comprenant un sous-modèle de classification d'image cible et un sous-modèle de classification d'image non-cible, le sous-modèle de classification d'image cible étant utilisé pour discriminer l'image à traiter et déterminer les premières informations de référence de classification cible, le sous-modèle de classification

24

d'image non-cible étant utilisé pour discriminer l'image à traiter et déterminer les secondes informations de référence de classification cible, le modèle de classification d'image étant entraîné selon le procédé décrit dans l'une quelconque des revendications 1 à 6 ;

la détermination d'une catégorie à laquelle appartient l'image à traiter en fonction de l'ensemble d'informations de référence de classification de l'image à traiter.

8. Dispositif électronique, comprenant :

un processeur ;
un dispositif de stockage pour stocker des instructions exécutables par le processeur ;
dans lequel le processeur étant configuré pour exécuter les instructions pour mettre en œuvre le procédé selon l'une quelconque des revendications 1 à 6 ; ou, le processeur étant configuré pour exécuter les instructions pour mettre en œuvre le procédé selon la revendication 7.

9. Support de stockage lisible par ordinateur, lorsque des instructions dans le support de stockage sont exécutées par un processeur d'un dispositif électronique, le dispositif électronique étant amené à exécuter le procédé selon l'une quelconque des revendications 1 à 6 ; ou le processeur étant configuré pour exécuter les instructions pour mettre en œuvre le procédé selon la revendication 7.

FIG. 1

FIG. 2

| Discriminate the image to be processed through the image classification model and determine a classification reference information set of the image to be processed | S302 |

↓

| Determine the category to which the image to be processed belongs according to the classification reference information set of the image to be processed | S304 |

FIG. 3

400

410
| Obtaining unit |

420
| Discriminating unit |

430
| Determining unit |

440
| Tuning unit |

FIG. 4

~ 500

~ 510

Discriminating unit

~ 520

Determining unit

FIG. 5

Processor

Internal bus

Network interface

Storage device

Non-volatile memory

Electronic device

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210872051

**Non-patent literature cited in the description**

- **XIE QIZHE et al.** 2020 IEEE/CVF CONFERENCE ON COMPUTER VISION AND PATTERN RECOGNITION (CVPR). IEEE